(19) Europäisches Patentamt
European Patent Office
Office européen des brevets

(11) **EP 2 068 166 B1**

(12) **EUROPEAN PATENT SPECIFICATION**

(45) Date of publication and mention
of the grant of the patent:
**12.09.2012   Bulletin 2012/37**

(51) Int Cl.:
***G01S 19/20*** (2010.01)

(21) Application number: **08170533.7**

(22) Date of filing: **05.12.2008**

(54) **Navigation system with apparatus for detecting accuracy failures**

Navigationssystem mit Vorrichtung zur Detektion von Genauigkeitsfehlern

Système de navigation doté d'un appareil pour détecter les défauts de précision

(84) Designated Contracting States:
**FR GB**

(30) Priority: **07.12.2007   US 12303 P**
**14.04.2008   US 102527**

(43) Date of publication of application:
**10.06.2009   Bulletin 2009/24**

(73) Proprietor: **Honeywell International Inc.**
**Morristown, NJ 07962 (US)**
Designated Contracting States:
**FR GB**

(72) Inventor: **Vanderwerf, Kevin**
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(56) References cited:
**CA-A1- 2 379 702     US-B1- 6 798 377**

- **VANDERWERF K ET AL: "FDE USING MULTIPLE INTEGRATED GPS/INERTIAL KALMAN FILTERS IN THE PRESENCE OF TEMPORALLY AND SPATIALLY CORRELATED IONOSPHERIC ERRORS" PROCEEDINGS OF THE INSTITUTE OF NAVIGATION (ION) GPS, XX, XX, 11 September 2001 (2001-09-11), pages 2676-2685, XP008018785**

**Description**

## BACKGROUND OF THE INVENTION

Conventional RAIM algorithms may be based on either a weighted or un-weighted least squares solution where the errors in each satellite's pseudo-range measurement are uncorrelated with the errors in the other satellites' pseudo-range measurements.

US 6 798 377 discloses a method for improving a satellite receiver autonomous integrity monitoring availability and fault detection and exclusion function by using an adaptive threshold logic.

Vanderwerf K. et al in "FDE using multiple integrated GPS/inertial Kalman filters in the presence of temporarily and spatially correlated atmospheric errors, Proceedings of the Institute of Navigation GPS, 11 September 2001, pages 2676-2685, XP008018785 discloses a proposed statistical ionospheric error model to account for temporal and spatial correlation of ionospheric delays both in normal and stormy conditions.

However, the ionospheric error (which can be the dominant error source) in each satellite's pseudo-range is, in fact, highly correlated with that of each of the other satellites. By ignoring this correlation, the computed Horizontal Protection Limit (HPL) which bounds the horizontal position error is much larger than necessary. As a result the availability of GPS to do a low Required Navigation Performance (RNP) approach suffers.

## SUMMARY OF THE INVENTION

The invention discloses a navigation system according to claim 1 and a computer-readable medium according to claim 9.

## BRIEF DESCRIPTION OF THE DRAWINGS

Preferred and alternative embodiments of the present invention are described in detail below with reference to the following drawings.

FIG. 1 shows a navigation system incorporating embodiments of the present invention; and

FIG. 2 shows a process according to an embodiment of the invention.

## DETAILED DESCRIPTION OF THE PREFERRED EMBODIMENT

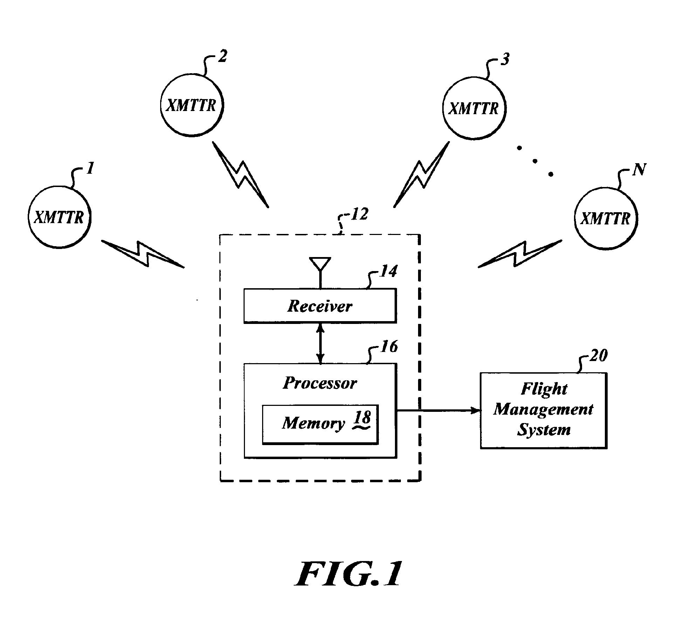

FIG. 1 shows a radio navigation system incorporating the teachings of an embodiment of the present invention. The system includes several transmitters 1-N and user set 12. Transmitters 1-N, in the preferred embodiment, are a subset of the NAVSTAR GPS constellation of satellite transmitters, with each transmitter visible from the antenna of user set 12. Transmitters 1-N broadcast N respective signals indicating respective transmitter positions and signal transmission times to user set 12.

User set 12, mounted to an aircraft (not shown), includes receiver 14, processor 16, and a memory device, such as processor memory 18. Receiver 14, preferably NAVSTAR GPS compatible, receives the signals, extracts the position and time data, and provides pseudorange measurements to processor 16. From the pseudorange measurements, processor 16 derives a position solution for the user set 12. Although the satellites transmit their positions in World Geodetic System of 1984 (WGS-84) coordinates, a Cartesian earth-centered earth-fixed system, the preferred embodiment determines the position solution in a local reference frame L, which is level with the north-east coordinate plane and tangential to the Earth. This frame choice, however, is not critical, since it is well-understood how to transform coordinates from one frame to another.

Processor 16 also uses the pseudorange measurements to detect satellite transmitter failures and to determine a worst-case error, or protection limit, both of which it outputs with the position solution to flight management system 20. Flight management system 20 compares the protection limit to an alarm limit corresponding to a particular aircraft flight phase. For example, during a pre-landing flight phase, such as nonprecision approach, the alarm limit (or allowable radial error) is 0.3 nautical miles, but during a less-demanding oceanic flight phase, the alarm limit is 2-10 nautical miles. If the protection limit exceeds the alarm limit, the flight management system, or its equivalent, announces or signals an integrity failure to a navigational display in the cockpit of the aircraft. The processor also signals whether it has detected any satellite transmitter failures.

An embodiment of the invention models the correlation of the ionospheric errors between each pair of satellites as a function of the distance between their ionospheric pierce points. The closer the pierce points, the higher the correlation. The root-mean-square (RMS) uncertainty (or sigma) of each satellite's pseudo-range measurement is computed using the ionospheric variance model defined in DO-229D, Appendix J. Using the computed correlation coefficients and the sigma for each satellite, the ionospheric measurement error covariance matrix is formed. The remaining errors (satellite clock and ephemeris, tropospheric, multi-path and receiver noise) are assumed to be uncorrelated. Thus, the combined measurement error covariance matrix for these error sources is diagonal. These two matrices are added to form the total measurement error covariance matrix. This matrix is then inverted to form the weighting matrix for the least squares solution. Fault detection and exclusion can then be performed and the various protection levels such as the horizontal protection level (HPL), vertical protection level (VPL), horizontal exclusion level (HEL), and vertical exclusion level (VEL) computed based on the methods of solution separation previously described in U. S. Patent Nos. 5,760,737 and 6,639,549.

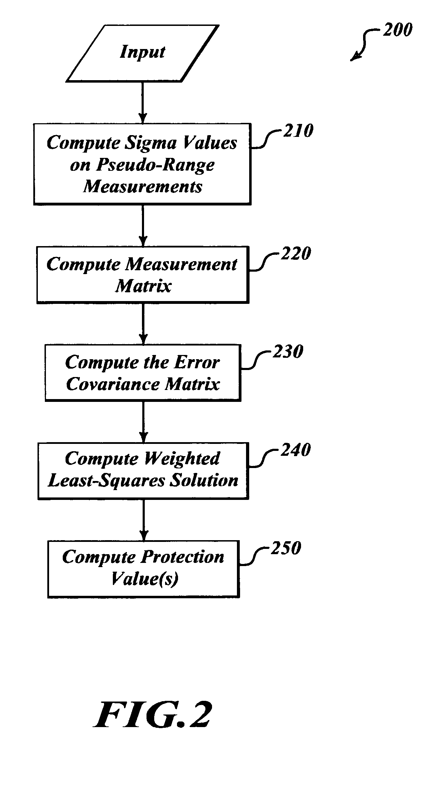

FIG. 2 illustrates a process 200, according to an embodiment of the invention, that can be implemented in the radio navigation system illustrated in FIG. 1. The process 200 is illustrated as a set of operations or steps shown as discrete blocks. The process 200 may be implemented in any suitable hardware, software, firmware, or combination thereof. As such the process 200 may be implemented in computer-executable instructions that can be transferred from one electronic device to a second electronic device via a communications medium. The order in which the operations are described is not to be necessarily construed as a limitation.

Referring to FIG. 2, at a step 210, the processor 16 computes the sigma (error) values on pseudo-range and measurements.

At a step 220, the processor 16 determines the measurement matrix. The true vector of pseudo-range residuals $\Delta\rho$ is related to the incremental position/time solution vector $\Delta\mathbf{x}$ (distance from the position linearization point) as follows:

$$\Delta\boldsymbol{\rho} = \boldsymbol{\rho} - \hat{\boldsymbol{\rho}} = \mathbf{H}\Delta\mathbf{x}$$

where **H** is the measurement matrix and is given by:

$$\mathbf{H} = \begin{bmatrix} -LOS_{1x} & -LOS_{1y} & -LOS_{1z} & 1 \\ -LOS_{2x} & -LOS_{2y} & -LOS_{2z} & 1 \\ \vdots & \vdots & \vdots & \vdots \\ -LOS_{Nx} & -LOS_{Ny} & -LOS_{Nz} & 1 \end{bmatrix}$$

$$\left.\begin{matrix} LOS_{ix} \\ LOS_{iy} \\ LOS_{iz} \end{matrix}\right| = \text{Line-of-sight unit vector pointing from the user to satellite } i$$

$$\Delta\mathbf{x} = \mathbf{x} - \hat{\mathbf{x}} = \text{true position/clock bias - linearization point}$$

At a step 230, the processor 16 computes the Error Covariance Matrix. The vector of measured pseudo-range residuals $\Delta\tilde{\rho}$ is the true pseudo-range residual vector plus the vector of residual errors $\delta\rho$ and is thus:

$$\begin{aligned} \Delta\tilde{\boldsymbol{\rho}} &= \boldsymbol{\rho} + \delta\boldsymbol{\rho} - \hat{\boldsymbol{\rho}} \\ &= \tilde{\boldsymbol{\rho}} - \hat{\boldsymbol{\rho}} \\ &= \mathbf{H}\Delta\mathbf{x} + \delta\boldsymbol{\rho} \end{aligned} \tag{2}$$

The processor 16 designates the post-update estimate of $\Delta\mathbf{x}$ as $\Delta\hat{\mathbf{x}}$. Then, the processor 16 can define the vector of post-update measurement residuals as:

$$\boldsymbol{\xi} = \Delta\tilde{\boldsymbol{\rho}} - \mathbf{H}\Delta\hat{\mathbf{x}} \tag{3}$$

Each post-update measurement residual is the difference between the measured pseudo-range residual and the predicted pseudo-range residual based on the post-update estimate $\Delta\hat{\mathbf{x}}$.

A "weighted least-squares solution" can be determined by the processor 16 by finding the value of $\Delta\hat{\mathbf{x}}$ which minimizes the weighted sum of squared residuals. Thus, the processor 16 may minimize:

$$\boldsymbol{\xi}^T \mathbf{W} \boldsymbol{\xi} = \left( \Delta\tilde{\boldsymbol{\rho}} - \mathbf{H}\Delta\hat{\mathbf{x}} \right)^T \mathbf{W} \left( \Delta\tilde{\boldsymbol{\rho}} - \mathbf{H}\Delta\hat{\mathbf{x}} \right) \tag{4}$$

where **W** is an appropriate weighting matrix. The weighting matrix generally chosen is one which normalizes the residuals based on the uncertainty of each pseudo-range measurement. Thus, the processor 16 yields:

$$\mathbf{W} = \begin{bmatrix} \dfrac{1}{\sigma_1^2} & 0 & \cdots & 0 \\ 0 & \dfrac{1}{\sigma_2^2} & \cdots & 0 \\ \vdots & \vdots & \ddots & \vdots \\ 0 & 0 & \cdots & \dfrac{1}{\sigma_N^2} \end{bmatrix}, \; \text{assuming uncorrelated measurements} \tag{5}$$

which represents the inverse of the pseudo-range measurement error covariance matrix assuming each pseudo-range error is uncorrelated with the others.

However, the vertical ionospheric delay component of each pseudo-range error is highly correlated with the others. If this correlation is known, then the processor 16 can take advantage of that knowledge by using the true pseudo-range measurement error covariance matrix **R**. The weighting matrix then becomes

$$\mathbf{W} = \mathbf{R}^{-1} = \begin{bmatrix} \sigma_1^2 & E[\delta\rho_1\delta\rho_2] & \cdots & E[\delta\rho_1\delta\rho_N] \\ E[\delta\rho_1\delta\rho_2] & \sigma_2^2 & \cdots & E[\delta\rho_2\delta\rho_N] \\ \vdots & \vdots & \ddots & \vdots \\ E[\delta\rho_1\delta\rho_N] & E[\delta\rho_2\delta\rho_N] & \cdots & \sigma_N^2 \end{bmatrix}^{-1} \tag{6}$$

The value of $\Delta\hat{\mathbf{x}}$ that minimizes (4) is determined by taking the derivative, setting it equal to zero, and solving for $\Delta\hat{\mathbf{x}}$. This yields:

$$\begin{aligned} \Delta\hat{\mathbf{x}} &= \left( \mathbf{H}^T \mathbf{W} \mathbf{H} \right)^{-1} \mathbf{H}^T \mathbf{W} \Delta\tilde{\boldsymbol{\rho}} \\ &= \mathbf{S} \Delta\tilde{\boldsymbol{\rho}} \end{aligned} \tag{7}$$

where the processor 16 has defined the weighted least-squares solution matrix **S** as:

$$\mathbf{S} = \left( \mathbf{H}^T \mathbf{W} \mathbf{H} \right)^{-1} \mathbf{H}^T \mathbf{W} \tag{8}$$

**Altitude Aiding**

Barometric altitude can be used by the processor 16 to augment the GPS pseudo-range measurements. If it is used, the measurement matrix is then augmented as follows

$$\mathbf{H} = \begin{bmatrix} -LOS_{1x} & -LOS_{1y} & -LOS_{1z} & 1 \\ -LOS_{2x} & -LOS_{2y} & -LOS_{2z} & 1 \\ \vdots & \vdots & \vdots & \vdots \\ -LOS_{Nx} & -LOS_{Ny} & -LOS_{Nz} & 1 \\ 0 & 0 & -1 & 0 \end{bmatrix} \tag{9}$$

This measurement matrix assumes that the incremental position vector (the first 3 elements) within $\Delta\mathbf{x}$ are given in local-level coordinates (with the z axis down). The line-of-sight (LOS) elements then must also be expressed in the local-level coordinates. The weighting matrix is also augmented as follows

$$\mathbf{W} = \mathbf{R}^{-1} = \begin{bmatrix} \sigma_1^2 & E[\delta\rho_1\delta\rho_2] & \cdots & E[\delta\rho_1\delta\rho_N] & 0 \\ E[\delta\rho_1\delta\rho_2] & \sigma_2^2 & \cdots & E[\delta\rho_2\delta\rho_N] & 0 \\ \vdots & \vdots & \ddots & \vdots & \vdots \\ E[\delta\rho_1\delta\rho_N] & E[\delta\rho_2\delta\rho_N] & \cdots & \sigma_N^2 & 0 \\ 0 & 0 & \cdots & 0 & \sigma_{baro}^2 \end{bmatrix}^{-1} \tag{10}$$

**Computing the Measurement Covariance Matrix**

There are multiple methods that can be employed to determine the measurement error covariance matrix. In the case of a Kalman filter application, the temporal behavior (time-correlation) of the ionospheric delays may be modeled. The spatially correlated ionospheric error for satellite *i* can be modeled as a weighted sum of three independent normalized (sigma = 1.0) Gaussian random errors scaled by the nominal iono sigma value for that satellite as follows:

$$\delta\rho_{iono\_i} = \sigma_{iono\_i}\mathbf{k}_{iono\_i}^T\mathbf{x}_{ref} \tag{11}$$

where $\mathbf{x}_{ref}$ is a 3x1 vector of independent Gaussian random errors with zero mean and a variance of 1. The weighting vector $\mathbf{k}_{iono\_i}^T$ is determined by the processor 16 by first defining three grid points on the thin shell model of the ionosphere (at a height of 350 km) equally spaced in azimuth at a great circle distance of 1500 km from the user. The processor 16 may then define a 3x1 vector $\mathbf{x}_{grid}$ of normalized delays at these points. The delays at gridpoints *i* and *j* may be spatially correlated with each other based on the great circle distances between them according to:

$$E\left[x_{grid\_i}x_{grid\_j}^T\right] = 1 - \left(1 - e^{-d_{grid\_i,grid\_j}/d_{iono}}\right)^2 \tag{12}$$

where

$$d_{grid\_i,grid\_j} = \text{great circle distance between grid point } i \text{ and grid point } j$$
$$d_{iono} = \text{correlation distance of the ionospheric delay} = 4000 \text{ km} \tag{13}$$

Using that relationship the processor 16 can form a 3x3 covariance matrix $\mathbf{P}_{grid}$ which describes the correlations between each of the grid points:

$$\mathbf{P}_{grid} = E\left[\mathbf{x}_{grid}\mathbf{x}_{grid}^{T}\right]$$

If the delay processes that exist at these grid points are a certain linear combination of the reference independent Gaussian random errors, then they will have the desired spatial and temporal correlation. The processor 16 may assume that the desired linear combination is obtained by using a 3x3 upper-triangular mapping matrix $\mathbf{U}_{grid}$ as follows:

$$\mathbf{x}_{grid} = \mathbf{U}_{grid}\mathbf{x}_{ref} \tag{14}$$

The grid covariance matrix is then:

$$\mathbf{P}_{grid} = E\left[\mathbf{x}_{grid}\mathbf{x}_{grid}^{T}\right] = \mathbf{U}_{grid}E\left[\mathbf{x}_{ref}\mathbf{x}_{ref}^{T}\right]\mathbf{U}_{grid}^{T} \tag{15}$$

Therefore, the mapping matrix $\mathbf{U}_{grid}$ can be formed by the processor 16 simply by factoring the covariance matrix $\mathbf{P}_{grid}$. Since the geometry of the three gridpoints is fixed, the covariance matrix $\mathbf{P}_{grid}$ is constant and can thus be pre-computed by the processor 16. Now the processor 16 can choose a linear combination of the three grid-point delays that yields a normalized delay at the pierce-point of the satellite $i$ such that the proper spatial correlation with the three grid points (and thus, presumably, each of the other satellites) is achieved as follows:

$$\delta\rho_{norm\_iono\_i} = \mathbf{k}_{sat\_i\_grid}^{T}\mathbf{x}_{grid} \tag{16}$$

where

$\mathbf{k}_{sat\_i\_grid}$ = 3-vector of weighting factors
$\delta\rho_{norm\_iono\_i}$ = normalized delay at the satellite pierce-point
The satellite pseudo-range delay may be correlated to the delay at the $k^{th}$ grid point according to:

$$E\left[\delta\rho_{norm\_iono\_i}x_{grid\_k}^{T}\right] = 1-\left(1-e^{-d_{sat\_i\_grid\_k}/d_{iono}}\right)^{2} \tag{17}$$

where

$$d_{sat\_i\_grid\_k} = \text{great circle distance between the satellite pierce point and the grid point}$$
$$d_{iono} = \text{correlation distance of the nominal ionospheric delay} \tag{18}$$

The 1x3 covariance matrix $\mathbf{P}_{sat\_i\_grid}$, which defines the correlations between satellite $i$ and each of the grid points, is

$$\mathbf{P}_{sat\_i\_grid} = E\left[\delta\rho_{norm\_i}\mathbf{x}_{grid}^{T}\right] = E\left[\mathbf{k}_{sat\_i\_grid}^{T}\mathbf{x}_{grid}\mathbf{x}_{grid}^{T}\right] = \mathbf{k}_{sat\_i\_grid}^{T}\mathbf{P}_{grid} \tag{19}$$

Therefore the weighting vector $\mathbf{k}_{sat\_grid}$ can be found by the processor 16 as follows:

$$\mathbf{k}_{sat\_i\_grid}^{T} = \mathbf{P}_{sat\_i\_grid}\mathbf{P}_{grid}^{-1} \tag{20}$$

Combining (14) and (16), the processor 16 can obtain the normalized vertical delays directly from the three independent reference delays as follows:

$$\delta \rho_{norm\_iono\_i} = \mathbf{k}_{sat\_i\_grid}^{T} \mathbf{U}_{grid} \mathbf{x}_{ref}$$
$$= \mathbf{k}_{iono\_i}^{T} \mathbf{x}_{ref} \qquad (21)$$

Thus, the weighting vector is:

$$\mathbf{k}_{iono\_i}^{T} = \mathbf{k}_{sat\_i\_grid}^{T} \mathbf{U}_{grid} \qquad (22)$$

The processor 16 can form a vector of N normalized pseudo-range iono delays from (21) as follows:

$$\delta \boldsymbol{\rho}_{norm\_iono} = \begin{bmatrix} \mathbf{k}_{sat\_1\_grid}^{T} \\ \mathbf{k}_{sat\_2\_grid}^{T} \\ \vdots \\ \mathbf{k}_{sat\_N\_grid}^{T} \end{bmatrix} \mathbf{U}_{grid} \mathbf{x}_{ref}$$
$$= \mathbf{K}_{sat\_grid} \mathbf{U}_{grid} \mathbf{x}_{ref} \qquad (23)$$

The actual (non-normalized) delay along the line of sight can be obtained by the processor 16 by scaling the normalized delay by the sigma value for that satellite based on the geomagnetic latitude of the pierce-point and obliquity factor as defined in DO-229. In vector form, the processor 16 yields:

$$\delta \boldsymbol{\rho}_{iono} = \begin{bmatrix} \sigma_{iono\_1} & 0 & \cdots & 0 \\ 0 & \sigma_{iono\_2} & \ddots & \vdots \\ \vdots & \ddots & \ddots & 0 \\ 0 & \cdots & 0 & \sigma_{iono\_N} \end{bmatrix} \delta \boldsymbol{\rho}_{norm\_iono}$$
$$= \begin{bmatrix} \sigma_{iono\_1} & 0 & \cdots & 0 \\ 0 & \sigma_{iono\_2} & \ddots & \vdots \\ \vdots & \ddots & \ddots & 0 \\ 0 & \cdots & 0 & \sigma_{iono\_N} \end{bmatrix} \mathbf{K}_{sat\_grid} \mathbf{U}_{grid} \mathbf{x}_{ref} \qquad (24)$$
$$= \boldsymbol{\Gamma} \mathbf{K}_{sat\_grid} \mathbf{U}_{grid} \mathbf{x}_{ref}$$

The ionospheric delay error covariance matrix may be defined as:

$$\mathbf{R}_{iono} = E\left[ \delta \boldsymbol{\rho}_{iono} \delta \boldsymbol{\rho}_{iono}^{T} \right]$$
$$= \boldsymbol{\Gamma} \mathbf{K}_{sat\_grid} \mathbf{U}_{grid} E\left[ \mathbf{x}_{ref} \mathbf{x}_{ref}^{T} \right] \mathbf{U}_{grid}^{T} \mathbf{K}_{sat\_grid}^{T} \boldsymbol{\Gamma}^{T} \qquad (25)$$
$$= \boldsymbol{\Gamma} \mathbf{K}_{sat\_grid} \mathbf{P}_{grid} \mathbf{K}_{sat\_grid}^{T} \boldsymbol{\Gamma}^{T}$$

$$\mathbf{R}_{iono} = \begin{bmatrix} \sigma^2_{iono\_1} & E[\delta\rho_{iono\_1}\delta\rho_{iono\_2}] & \cdots & E[\delta\rho_{iono\_1}\delta\rho_{iono\_N}] \\ E[\delta\rho_{iono\_1}\delta\rho_{iono\_2}] & \sigma^2_{iono\_2} & \cdots & E[\delta\rho_{iono\_2}\delta\rho_{iono\_N}] \\ \vdots & \vdots & \ddots & \vdots \\ E[\delta\rho_{iono\_1}\delta\rho_{iono\_N}] & E[\delta\rho_{iono\_2}\delta\rho_{iono\_N}] & \cdots & \sigma^2_{iono\_N} \end{bmatrix}$$

The rest of the pseudo-range measurement errors are assumed to be uncorrelated with a composite one-sigma value denoted by $\sigma_{other\_i}$ for satellite $i$. For simplicity, the processor 16 can assume that the one-sigma value for each satellite is a constant six meters. The total measurement error covariance matrix is then:

$$\mathbf{R} = \mathbf{W}^{-1} = \mathbf{R}_{iono} + \begin{bmatrix} \sigma^2_{other\_1} & 0 & \cdots & 0 \\ 0 & \sigma^2_{other\_2} & \ddots & \vdots \\ \vdots & \ddots & \ddots & 0 \\ 0 & \cdots & 0 & \sigma^2_{other\_N} \end{bmatrix} \tag{26}$$

In a snapshot RAIM approach, the correlations between satellites are computed directly without the use of a grid. Computing the correlations between satellites directly may be both simpler and slightly more accurate.

Specifically, ionospheric error covariance may be modeled as a function of the great circle distance between the pierce points along the ionospheric shell (350 km above the earth's surface):

$$E[\delta\rho_{iono\_i}\delta\rho_{iono\_j}] = \sigma_{iono\_i}\sigma_{iono\_j}\left[1 - \left(1 - e^{-d_{ij}/d_{iono}}\right)^2\right]$$

where:

$d_{ij}$ = great circle distance between pierce points for sats $i$ and $j$

$d_{iono}$ = de-correlation distance = 4000 km

Ionospheric errors are highly correlated. As such:

$$\mathbf{W} = \mathbf{R}^{-1} = \left(\mathbf{R}_{iono} + \mathbf{R}_{other}\right)^{-1}$$

where:

$$\mathbf{R}_{iono} = \begin{bmatrix} \sigma^2_{iono\_1} & E[\delta\rho_{iono\_1}\delta\rho_{iono\_2}] & \cdots & E[\delta\rho_{iono\_1}\delta\rho_{iono\_N}] \\ E[\delta\rho_{iono\_1}\delta\rho_{iono\_2}] & \sigma^2_{iono\_2} & \cdots & E[\delta\rho_{iono\_2}\delta\rho_{iono\_N}] \\ \vdots & \vdots & \ddots & \vdots \\ E[\delta\rho_{iono\_1}\delta\rho_{iono\_N}] & E[\delta\rho_{iono\_2}\delta\rho_{iono\_N}] & \cdots & \sigma^2_{iono\_N} \end{bmatrix}$$

$$\mathbf{R}_{other} = \begin{bmatrix} \sigma^2_{other\_1} & 0 & \cdots & 0 \\ 0 & \sigma^2_{other\_2} & \cdots & 0 \\ \vdots & \vdots & \ddots & \vdots \\ 0 & 0 & \cdots & \sigma^2_{other\_N} \end{bmatrix} \quad (14)$$

**Error Covariance for the Weighted Least Squares Solution**

At a step 240, the processor 16 computes a weighted least-squares solution. The error in the post-updated solution is:

$$\begin{aligned} \delta\hat{\mathbf{x}} &= \Delta\hat{\mathbf{x}} - \Delta\mathbf{x} \\ &= \left(\mathbf{H}^T\mathbf{W}\mathbf{H}\right)^{-1}\mathbf{H}^T\mathbf{W}\Delta\tilde{\boldsymbol{\rho}} - \Delta\mathbf{x} \end{aligned} \quad (27)$$

Substituting (2) into (27) yields:

$$\begin{aligned} \delta\hat{\mathbf{x}} &= \left(\mathbf{H}^T\mathbf{W}\mathbf{H}\right)^{-1}\mathbf{H}^T\mathbf{W}\left(\mathbf{H}\Delta\mathbf{x} + \delta\boldsymbol{\rho}\right) - \Delta\mathbf{x} \\ &= \Delta\mathbf{x} - \left(\mathbf{H}^T\mathbf{W}\mathbf{H}\right)^{-1}\mathbf{H}^T\mathbf{W}\delta\boldsymbol{\rho} - \Delta\mathbf{x} \\ &= \left(\mathbf{H}^T\mathbf{W}\mathbf{H}\right)^{-1}\mathbf{H}^T\mathbf{W}\delta\boldsymbol{\rho} \\ &= \mathbf{S}\delta\boldsymbol{\rho} \end{aligned} \quad (28)$$

Thus, the solution matrix S maps the pseudo-range errors into the post-updated solution error vector. The solution error covariance matrix may be defined as:

$$\begin{aligned} \mathbf{P} &= E\left[\delta\hat{\mathbf{x}}\delta\hat{\mathbf{x}}^T\right] = \mathbf{S}E\left[\delta\boldsymbol{\rho}\delta\boldsymbol{\rho}^T\right]\mathbf{S}^T \\ &= \mathbf{S}\mathbf{W}^{-1}\mathbf{S}^T \\ &= \left(\mathbf{H}^T\mathbf{W}\mathbf{H}\right)^{-1}\mathbf{H}^T\mathbf{W}\mathbf{W}^{-1}\mathbf{W}\mathbf{H}\left(\mathbf{H}^T\mathbf{W}\mathbf{H}\right)^{-1} \\ &= \left(\mathbf{H}^T\mathbf{W}\mathbf{H}\right)^{-1} \end{aligned} \quad (29)$$

The x and y horizontal position errors are statistically described by the upper 2x2 portion of **P**. The major and minor axes of the horizontal position error ellipse are equal to the square roots of the maximum and minimum eigenvalues of this 2x2 matrix and represent the one-sigma errors in the corresponding directions. Thus, the one-sigma error in the worst-case direction is given by:

$$\begin{aligned} \sigma_{horz\_max} &= \sqrt{\lambda^{P(1:2,1:2)}_{max}} \\ &= \sqrt{\frac{p_{11} + p_{22}}{2} + \sqrt{\left(\frac{p_{11} - p_{22}}{2}\right)^2 + \left(p_{12}\right)^2}} \end{aligned} \quad (30)$$

The one-sigma error in the vertical position is given by:

$$\sigma_{vert} = \sqrt{p_{33}} \tag{31}$$

Horizontal Figure of Merit is a conservative 95% fault-free error bound and may be computed by the processor 16 as the 2D RMS error from the error covariance matrix

$$HFOM = 2\sqrt{P(1,1) + P(2,2)}$$

Similarly, the Vertical Figure of Merit may be computed by the processor 16 as the 2-sigma vertical error from the error covariance matrix

$$VFOM = 2\sqrt{P(3,3)}$$

**Parity Space RAIM**

At a step 250, the processor 16 computes at least one protection level value. In doing so, the processor 16 can employ a parity space technique. Recall that the weighted least squares solution may be expressed as:

$$\Delta\hat{\mathbf{x}} = \left(\mathbf{H}^T\mathbf{W}\mathbf{H}\right)^{-1}\mathbf{H}^T\mathbf{W}\Delta\tilde{\boldsymbol{\rho}}$$
$$= \mathbf{S}\Delta\tilde{\boldsymbol{\rho}}$$

$$\mathbf{W} = \mathbf{R}^{-1\cdot} = \left(E\left[\delta\boldsymbol{\rho}\delta\boldsymbol{\rho}^T\right]\right)^{-1}$$

The correlated measurement set can be transformed by the processor 16 into a set that is uncorrelated by factoring, using a matrix factorization method known in the art, the weighting matrix W:

$$\mathbf{W} = \mathbf{L}^T\mathbf{L}$$

Where **L** is the lower triangular square root of **W**. This results in:

$$\Delta\hat{\mathbf{x}} = \left(\mathbf{H}^T\mathbf{L}^T\mathbf{L}\mathbf{H}\right)^{-1}\mathbf{H}^T\mathbf{L}^T\mathbf{L}\Delta\tilde{\boldsymbol{\rho}} = \left[\left(\mathbf{L}\mathbf{H}\right)^T\mathbf{L}\mathbf{H}\right]^{-1}\left(\mathbf{L}\mathbf{H}\right)^T\mathbf{L}\Delta\tilde{\boldsymbol{\rho}}$$
$$= \left(\bar{\mathbf{H}}^T\bar{\mathbf{H}}\right)^{-1}\bar{\mathbf{H}}^T\Delta\bar{\boldsymbol{\rho}} = \bar{\mathbf{S}}\Delta\bar{\boldsymbol{\rho}}$$

where

$$\bar{\mathbf{H}} = \mathbf{LH}, \quad \Delta\bar{\boldsymbol{\rho}} = \mathbf{L}\Delta\tilde{\boldsymbol{\rho}}, \quad \bar{\mathbf{S}} = \left(\bar{\mathbf{H}}^T\bar{\mathbf{H}}\right)^{-1}\bar{\mathbf{H}}$$

The covariance of the transformed measurement errors is:

$$
\begin{aligned}
E\left[\delta\bar{\boldsymbol{\rho}}\delta\bar{\boldsymbol{\rho}}^T\right] &= E\left[\mathbf{L}\delta\boldsymbol{\rho}\delta\boldsymbol{\rho}^T\mathbf{L}^T\right] \\
&= \mathbf{L}\mathbf{W}^{-1}\mathbf{L}^T = \mathbf{L}\left(\mathbf{L}^T\mathbf{L}\right)^{-1}\mathbf{L}^T \\
&= \mathbf{L}\left(\mathbf{L}^{-1}\mathbf{L}^{-T}\right)\mathbf{L}^T \\
&= \mathbf{I}_N
\end{aligned}
$$

Thus, it is seen that the transformed measurements are uncorrelated, each with unity variance. Multiplying our measurement equation by L the processor 16 gets:

$$\mathbf{L}\Delta\tilde{\boldsymbol{\rho}} = \mathbf{LH}\Delta\mathbf{x} + \mathbf{L}\delta\boldsymbol{\rho}$$

$$\Delta\bar{\boldsymbol{\rho}} = \bar{\mathbf{H}}\Delta\mathbf{x} + \delta\bar{\boldsymbol{\rho}}$$

An NxN orthogonal matrix Q can be found by the processor 16, such that:

$$
\mathbf{Q}\bar{\mathbf{H}} = \begin{bmatrix} q_{11} & q_{12} & \cdots & q_{1N} \\ q_{21} & q_{22} & \cdots & q_{2N} \\ q_{31} & q_{32} & \cdots & q_{3N} \\ q_{41} & q_{42} & \cdots & q_{4N} \\ \hline q_{51} & q_{52} & \cdots & q_{5N} \\ \vdots & \vdots & \vdots & \vdots \\ q_{N1} & q_{N2} & q_{N3} & q_{NN} \end{bmatrix} \bar{\mathbf{H}} = \begin{bmatrix} \mathbf{A} \\ \mathbf{B} \end{bmatrix}\bar{\mathbf{H}} = \begin{bmatrix} u_{11} & u_{12} & u_{13} & u_{14} \\ 0 & u_{22} & u_{23} & u_{24} \\ 0 & 0 & u_{33} & u_{34} \\ 0 & 0 & 0 & u_{44} \\ \hline 0 & 0 & 0 & 0 \\ \vdots & \vdots & \vdots & \vdots \\ 0 & 0 & 0 & 0 \end{bmatrix} = \begin{bmatrix} \mathbf{U} \\ \mathbf{0} \end{bmatrix}
$$

Thus, if the processor 16 multiplies the measurement equation by Q, the result is:

$$\mathbf{Q}\Delta\bar{\boldsymbol{\rho}} = \mathbf{Q}\bar{\mathbf{H}}\Delta\mathbf{x} + \mathbf{Q}\delta\tilde{\boldsymbol{\rho}}$$

$$\begin{bmatrix} \mathbf{A} \\ \mathbf{B} \end{bmatrix}\Delta\bar{\boldsymbol{\rho}} = \begin{bmatrix} \mathbf{U} \\ \mathbf{0} \end{bmatrix}\Delta\mathbf{x} + \begin{bmatrix} \mathbf{A} \\ \mathbf{B} \end{bmatrix}\delta\bar{\boldsymbol{\rho}}$$

Where **A** is the upper 4xN portion of **Q** and **B** is the lower (N-4)xN portion. The following two equations result:

$$\mathbf{A}\Delta\overline{\boldsymbol{\rho}} = \mathbf{U}\Delta\mathbf{x} + \mathbf{A}\delta\overline{\boldsymbol{\rho}}$$

$$\mathbf{B}\Delta\overline{\boldsymbol{\rho}} = \mathbf{B}\delta\overline{\boldsymbol{\rho}} = \mathbf{p}$$

The first equation can be used to solve for the estimated least squares solution by setting the pseudo-range error to zero:

$$\mathbf{A}\Delta\overline{\boldsymbol{\rho}} = \mathbf{U}\Delta\hat{\mathbf{x}} \quad \Rightarrow \quad \Delta\hat{\mathbf{x}} = \mathbf{U}^{-1}\mathbf{A}\Delta\overline{\boldsymbol{\rho}}$$

This equation is a more efficient than the previously given one since it only requires inverting an upper-triangular matrix.

The second equation gives us the parity vector **p** which is non-zero only when there are pseudo-range errors. In the absence of a failure, the parity covariance is:

$$E\left[\mathbf{p}\mathbf{p}^T\right] = \mathbf{B}E\left[\delta\overline{\boldsymbol{\rho}}\delta\overline{\boldsymbol{\rho}}^T\right]\mathbf{B}^T = \mathbf{B}\mathbf{B}^T$$
$$= \mathbf{I}_{N-4}$$

Thus the parity elements are also uncorrelated zero mean Gaussian random variables with unity variance.

In an embodiment, the processor 16 employs a chi-square method using the concept of pbias. In such an embodiment, the processor 16 uses the square of the parity magnitude as the discriminator (test statistic) $d$ as follows:

$$d = \mathbf{p}^T\mathbf{p} = p_1^2 + p_2^2 + \ldots + p_{N-4}^2$$

The discriminator will then have a central chi-square distribution with $N$-4 degrees of freedom. The processor 16 places a threshold on this discriminator above which a failure is declared. This threshold D is computed by the processor 16 from the chi-square probability density function to yield an allowable false alarm probability.

Once the threshold has been set, the question becomes, with a failure on a single satellite that results in the discriminator just reaching the threshold, how large the resulting position error can be while meeting the probability of missed detection. A bias failure $\varepsilon$ on the $k$th satellite will result in a solution error and a parity magnitude error of:

$$\delta\hat{\mathbf{x}} = \mathbf{S}\delta\boldsymbol{\rho} = \mathbf{S}\begin{bmatrix} 0 \\ \vdots \\ \varepsilon \\ \vdots \\ 0 \end{bmatrix} = \begin{bmatrix} s_{1k} \\ s_{2k} \\ s_{3k} \\ s_{4k} \end{bmatrix}\varepsilon$$

$$|\mathbf{p}| = \sqrt{\mathbf{p}^T \mathbf{p}}$$
$$= \sqrt{\delta\boldsymbol{\rho}^T \mathbf{L}^T \mathbf{B}^T \mathbf{B} \mathbf{L} \delta\boldsymbol{\rho}}$$
$$= \varepsilon \sqrt{\Lambda_{kk}}$$

where $\Lambda = \overline{\mathbf{B}}^T \overline{\mathbf{B}}$ and $\overline{\mathbf{B}} = \mathbf{B}\mathbf{L}$

Thus the parity bias is related to the horizontal position error through the following slope:

$$\text{slope}(k) = \frac{\sqrt{s_{1k}^2 + s_{2k}^2}}{\sqrt{\Lambda_{kk}}}$$

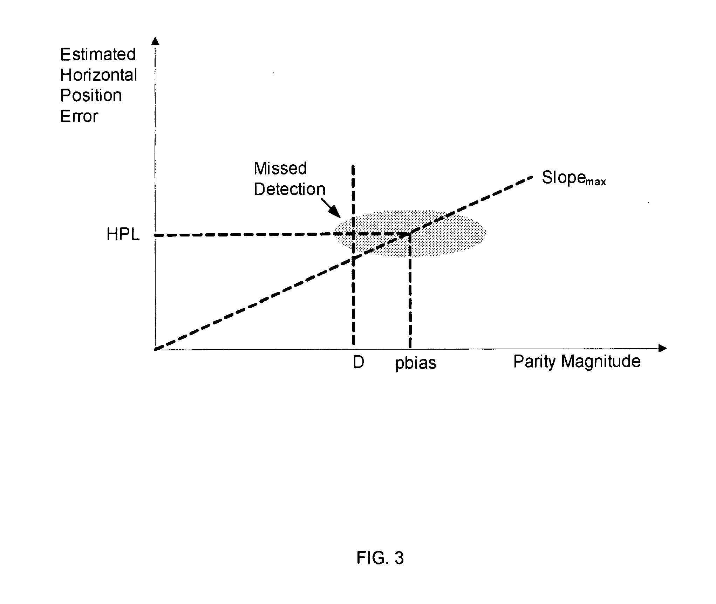

The satellite with the largest slope is the most difficult to detect. This slope is referred to as Slope$_{max}$. Figure 3 depicts a noise scatter that would occur if there was a bias on the most difficult to detect satellite in the presence of the expected noise. The specific bias that results in the percentage of data to the left of the detection threshold D equal to the missed detection probability is of particular interest. The parity magnitude associated with this bias is called "pbias."

With the bias present, the discriminator (square of the parity magnitude) has a non-central chi-square distribution with $N$-4 degrees of freedom. It can be shown that the non-centrality parameter $\lambda$ of the chi-square distribution is:

$$\lambda = \text{pbias}^2$$

Thus, using the non-central chi-square probability density function, the processor 16 can determine the value for pbias which meets the required probability of missed detection.

The Horizontal Protection Level (HPL) is then:

$$\mathbf{HPL} = \text{Slope}_{max} \cdot \text{pbias}$$

**Gaussian Method by Rotation of the Parity Space**

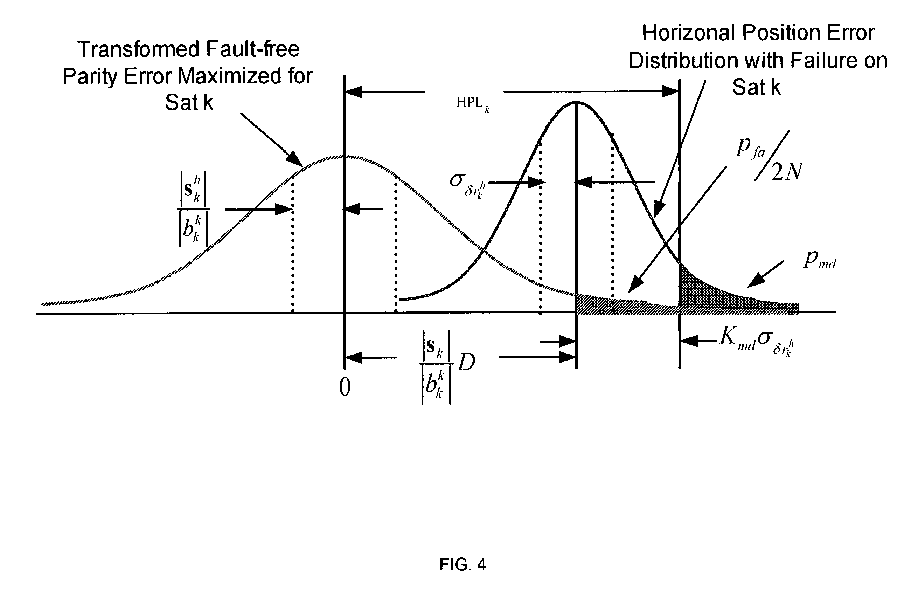

With reference to FIG. 4, through additional orthogonal transformations, an embodiment can rotate the parity space such that the parity error due to a bias failure on satellite $k$ is entirely along axis 1 of the parity space.

$$\mathbf{p}^k = \mathbf{Q}^k \overline{\mathbf{B}} \delta\boldsymbol{\rho} = \overline{\mathbf{B}}^k \delta\boldsymbol{\rho} = \begin{bmatrix} \overline{b}_1^k & \cdots & \overline{b}_k^k & \cdots & \overline{b}_N^k \\ X & \vdots & 0 & \vdots & X \\ \vdots & \vdots & \vdots & \vdots & \vdots \\ X & \vdots & 0 & \vdots & X \end{bmatrix} \begin{bmatrix} 0 \\ \vdots \\ \varepsilon \\ \vdots \\ 0 \end{bmatrix} = \begin{bmatrix} \left(\overline{\mathbf{b}}^k\right)^T \\ X \\ X \\ \vdots \\ X \end{bmatrix} \begin{bmatrix} 0 \\ \vdots \\ \varepsilon \\ \vdots \\ 0 \end{bmatrix} = \overline{b}_k^k \varepsilon$$

Since the bias only shows up on axis 1, the result is a scalar, and the discriminator, in general, can be determined by the processor 16 using the following:

$$d^k = p_1^k = \left(\overline{\mathbf{b}}^k\right)^T \delta\boldsymbol{\rho}$$

With no failure, only correlated random errors w are present:

$$d^k = \left(\overline{\mathbf{b}}^k\right)^T \mathbf{w} = \left(\mathbf{b}^k\right)^T \mathbf{L}\mathbf{w} = \left(\mathbf{b}^k\right)^T \overline{\mathbf{w}}$$

where

$$\mathbf{B}^k = \mathbf{Q}^k\mathbf{B} = \overline{\mathbf{B}}^k\mathbf{L}^{-1}, \quad \overline{\mathbf{w}} = \mathbf{L}\mathbf{w}, \quad E\left[\overline{\mathbf{w}}\overline{\mathbf{w}}^T\right] = \mathbf{I}_N$$

Note:

$$\sigma_{d^k}^2 = E\left[\left(d^k\right)^2\right] = E\left[\left(\mathbf{b}^k\right)^T \overline{\mathbf{w}}\overline{\mathbf{w}}^T \mathbf{b}^k\right] = E\left[\left(\mathbf{b}^k\right)^T \mathbf{b}^k\right] = 1$$

With a bias failure on satellite $k$ plus the correlated random errors w on each of the satellites, the discriminator can be determined by the processor 16 using the following:

$$d^k = \overline{b}_k^k \varepsilon + \left(\mathbf{b}^k\right)^T \overline{\mathbf{w}}$$

The impact of the noise in addition to failure on the horizontal position is:

$$\delta\mathbf{r}^h = \mathbf{S}^h\delta\boldsymbol{\rho} = \mathbf{s}_k^h\varepsilon + \mathbf{S}^h\mathbf{w} = \mathbf{s}_k^h\varepsilon + \overline{\mathbf{S}}^h\mathbf{L}\mathbf{w}$$
$$= \mathbf{s}_k^h\varepsilon + \overline{\mathbf{S}}^h\overline{\mathbf{w}}$$

where $\mathbf{S}^h$, $\overline{\mathbf{S}}^h$ = 1$^{st}$ two rows of $\mathbf{S}$ and $\overline{\mathbf{S}}$, and $\mathbf{s}_k^h$ = column $k$ of $\mathbf{S}^h$

Using the Gaussian probability density function, the threshold D, which meets the probability of false alarm, can be determined by the processor 16. At detection, the discriminator magnitude is equal to the threshold:

$$\left|d^k\right| = \left|\overline{b}_k^k \varepsilon + \left(\mathbf{b}^k\right)^T \overline{\mathbf{w}}\right| = D$$

Assuming the failure is positive and much larger than the noise:

$$\left|\overline{b}_k^k\right|\varepsilon + \left(\mathbf{b}^k\right)^T \overline{\mathbf{w}} = D \quad \Rightarrow \quad \varepsilon = \frac{D}{\left|\overline{b}_k^k\right|} - \frac{\left(\mathbf{b}^k\right)^T \overline{\mathbf{w}}}{\left|\overline{b}_k^k\right|}$$

The resulting horizontal position error can be determined by the processor 16 using the following:

$$\delta \mathbf{r}^h = \mathbf{s}_k^h \varepsilon + \overline{\mathbf{S}}^h \overline{\mathbf{w}} = \mathbf{s}_k^h \left( \frac{D}{\left|\overline{b}_k^k\right|} - \frac{\left(\mathbf{b}^k\right)^T \overline{\mathbf{w}}}{\left|\overline{b}_k^k\right|} \right) + \overline{\mathbf{S}}^h \overline{\mathbf{w}}$$

$$= \mathbf{s}_k^h \left( \frac{D}{\left|\overline{b}_k^k\right|} - \frac{1}{\left|\overline{b}_k^k\right|} \sum_{i=1}^N b_i^k \, \overline{w}_i \right) + \sum_{i=1}^N \overline{\mathbf{s}}_i^h \overline{w}_i$$

The position error magnitude in the direction of the failure is:

$$\delta r_k^h = \frac{\mathbf{s}_k^h}{\left|\mathbf{s}_k^h\right|} \cdot \delta \mathbf{r}^h$$

$$= \left|\mathbf{s}_k^h\right| \left( \frac{D}{\left|\overline{b}_k^k\right|} - \frac{1}{\left|\overline{b}_k^k\right|} \sum_{i=1}^N b_i^k \, \overline{w}_i \right) + \sum_{i=1}^N \frac{\mathbf{s}_k^h \cdot \overline{\mathbf{s}}_i^h}{\left|\mathbf{s}_k^h\right|} \overline{w}_i$$

$$= \underbrace{\frac{\left|\mathbf{s}_k^h\right|}{\left|\overline{b}_k^k\right|} D}_{Bias} + \underbrace{\frac{1}{\left|\overline{b}_k^k\right|} \sum_{i=1}^N \left( \frac{\mathbf{s}_k^h \cdot \overline{\mathbf{s}}_i^h}{\left|\mathbf{s}_k^h\right|} \left|\overline{b}_k^k\right| - \left|\mathbf{s}_k^h\right| b_i^k \right) \overline{w}_i}_{Noise}$$

Since the random pseudo-range error is uncorrelated with unity variance, the variance of the noise term about the mean can be determined by the processor 16 using the following:

$$\sigma_{\delta r_k^h} = \sqrt{\frac{1}{\left|\overline{b}_k^k\right|} \sum_{i=1}^N \left( \frac{\mathbf{s}_k^h \cdot \overline{\mathbf{s}}_i^h}{\left|\mathbf{s}_k^h\right|} \left|\overline{b}_k^k\right| - \left|\mathbf{s}_k^h\right| b_i^k \right)^2 }$$

The Horizontal Protection Level for satellite $k$ can be determined by the processor 16 using the following:

$$\mathrm{HPL}_k = \frac{\mathbf{s}_k^h}{\left|\mathbf{s}_k^h\right|} D + K_{md} \sigma_{\delta r_k^h}$$

$$= \frac{\mathbf{s}_k^h}{\left|\mathbf{s}_k^h\right|} K_{fa} + K_{md} \sigma_{\delta r_k^h}$$

where $K_{md}$ and $K_{fa}$ are sigma multipliers set to meet the probabilities of false alarm and missed detection

This process is repeated for all N satellites and the total HPL can be determined by the processor 16 using the following:

$$\mathrm{HPL} = \max\left(\mathrm{HPL}_k\right), \quad k = 1, N$$

**Ionospheric Error Model Calculations**

**Determination of Ionospheric Grid Points and Pierce Point Coordinates**

For a Kalman filter approach, and in order to utilize (17), the processor 16 may first determine the coordinates of each gridpoint and the coordinates of the satellite's ionospheric pierce point. Then, using those two sets of coordinates, the great circle distance between the pierce point and the grid point can be calculated by the processor 16. For either a Kalman filter or snapshot RAIM approach, knowing the coordinates of a point $i$ (*e.g.,* the system illustrated in FIG. 1, or "user") and the distance and azimuth from point $i$ to a point $j$ (e.g. the gridpoint), the coordinates of point $j$ can be determined by the processor 16 as follows:

$$\lambda_j = \tan^{-1}\left(\frac{\sin\lambda_i \cos\psi_{ij} + \cos\lambda_i \sin\psi_{ij} \cos A_{ij}}{\sqrt{\left(\cos\lambda_i \cos\psi_{ij} - \sin\lambda_i \sin\psi_{ij} \cos A_{ij}\right)^2 + \sin^2\psi_{ij} \sin^2 A_{ij}}}\right) \qquad (A.1)$$

$$\Lambda_j = \Lambda_i + \tan^{-1}\left(\frac{\sin\psi_{ij} \sin A_{ij}}{\cos\lambda_i \cos\psi_{ij} - \sin\lambda_i \sin\psi_{ij} \cos A_{ij}}\right) \qquad (A.2)$$

$\lambda_i$ = Geodetic latitude of point $i$
$\lambda_j$ = Geodetic latitude of point $j$
$\Lambda_i$ = Geodetic longitude of point $i$
$\Lambda_j$ = Geodetic longitude of point $j$
$A_{ij}$ = Azimuth angle (bearing) from point $i$ to point $j$

$\psi_{ij}$ = Angular distance (earth's central angle) from point $i$ to point $j$ $= \dfrac{d_{ij}}{R_e + h_I}$

$d_{ij}$ = Great circle distance from point $i$ to point $j$
$R_e$ = Radius of the earth = 6378 km
$h_I$ = Height of the ionosphere thin shell model = 350 km

The coordinates of the ionospheric pierce point of the satellite can also be calculated using (A.1) and (A.2). In this case, $\psi_{ij}$ represents the central angle from the user location to the pierce point and may be calculated by the processor 16 as follows:

$$\psi_{ij} = \frac{\pi}{2} - E - \sin^{-1}\left(\frac{R_e}{R_e + h_I}\cos E\right) \qquad (A.3)$$

where $E$ is the elevation angle of the satellite from the user location with respect to the local tangent plane.

**Computing Elevation and Azimuth Angles of Satellite**

The elevation angle $E$ of a satellite is defined as the angle the line-of-sight vector makes with the user's local tangent (horizontal) plane. The azimuth angle A of the satellite is the angle of the line-of-sight vector with respect to true north as measured in the horizontal plane. Thus, we have the following

$$E = \text{ATAN2}\left(-u_{LOS\_z}, \sqrt{u_{LOS\_x}^2 + u_{LOS\_y}^2}\right) \qquad (A.4)$$

$$A_0 = \text{ATAN2}\left(u_{LOS\_y}, u_{LOS\_x}\right) + \alpha \qquad\qquad (A.5)$$

$$A = \begin{cases} A_0, & -\pi \le A_0 < \pi \\ A_0 - 2\pi, & A_0 \ge \pi \\ A_0 + 2\pi, & A_0 < \pi \end{cases} \qquad\qquad (A.6)$$

where

$u_{LOS\_x}, u_{LOS\_y}, u_{LOS\_z}$ = x, y, and z components of the line-of-sight vector $\mathbf{u}_{LOS}^L$

$\alpha$ = wander angle (angle in azimuth from north to the x local-level frame axis)

Note that the azimuth angle is adjusted by +2π so that the result is between -π and +π.

**Determination of Great Circle Distance**

The great circle distance along the ionospheric thin shell model from a point *i*(e.g. satellite pierce point) to another point *j* (e.g. grid point) may be calculated by the processor 16 as follows:

$$d_{ij} = \left(R_c + h_I\right)\tan^{-1}\left(\frac{\sqrt{\cos^2 \lambda_j \sin^2 \Delta\Lambda_{ij} + \left(\cos \lambda_i \sin \lambda_j - \sin \lambda_i \cos \lambda_j \cos \Delta\Lambda_{ij}\right)^2}}{\cos \lambda_i \cos \lambda_j \cos \Delta\Lambda_{ij} + \sin \lambda_i \sin \lambda_j}\right) \qquad (A.7)$$

where

$$\Delta\Lambda_{ij} = \Lambda_j - \Lambda_i$$

**Ionospheric Variance Model**

The algorithm that may be executed by the processor 16 for calculation of the ionospheric model error variance may be from ICD-GPS-200C and DO-229D J.2.3. Note that the symbols in this section are unique to this section.

Using the satellite's elevation angle $E$, form the earth's central angle between the user position and the earth projections of ionospheric pierce point $\psi_{pp}$ using equation (A.3).

Next, using the satellite's elevation angle $E$, the azimuth angle $A$, the earth's central angle $\psi_{pp}$ and the user geodetic latitude $\lambda_u$ and longitude $A_u$, determine the pierce point geodetic latitude $\phi_{pp}$ and longitude $\lambda_{pp}$ using equations (A.1) and (A.2).

Form the absolute value of the geomagnetic latitude of the ionospheric pierce point.

$$\left|\lambda_m\right| = \left|\lambda_{pp} + 0.064\pi \cos\left(\Lambda_{pp} - 1.617\pi\right)\right| \quad \textbf{radians} \qquad\qquad (A.8)$$

Form an estimate of the vertical delay error based on geomagnetic latitude

$$\tau_{vert} = \begin{cases} 9 \text{ meters}, & \left|\lambda_m\right| \le 20 \text{ degrees} \\ 4.5 \text{ meters}, & 22.5° < \left|\lambda_m\right| \le 55° \\ 6 \text{ meters}, & \left|\lambda_m\right| > 55° \end{cases} \qquad\qquad (A.9)$$

Using the elevation angle $E$, calculate the square of the obliquity factor.

$$F_{pp}{}^{2} = \frac{1}{1 - \left( \dfrac{R_e \cos(E)}{R_e + h_I} \right)^{2}} \qquad (A.10)$$

Form the modeled estimated variance of the ionospheric delay.

$$\sigma_{\text{model}}^{2} = F_{pp}{}^{2} \tau_{vert}^{2} \qquad (A.11)$$

Form the estimated variance using the compensation that is applied if available from the receiver. (If not, assume zero).

$$\sigma_{\text{comp}}^{2} = \left( \frac{CT_{IONO}}{5} \right)^{2} \qquad (A.12)$$

Form the estimated variance of the ionospheric delay.

$$\sigma_{iono}^{2} = \max\left( \sigma_{\text{model}}^{2}, \sigma_{\text{comp}}^{2} \right) \qquad (A.13)$$

While the preferred embodiment of the invention has been illustrated and described, as noted above, many changes can be made. Accordingly, the scope of the invention is not limited by the disclosure of the preferred embodiment. Instead, the invention should be determined entirely by reference to the claims that follow.
The embodiments of the invention in which an exclusive property or privilege is claimed are defined as follows:

## Claims

1. A navigation system for a vehicle having a receiver operable to receive a plurality of signals from a plurality of transmitters, the navigation system comprising:

   a processor (16); and
   a memory device (18) having stored thereon machine-readable instructions that, when executed by the processor (16), enable the processor (16) to:

      measure pseudo-range residuals derived from the plurality of signals and determine a set of error estimates corresponding to the measured pseudo-range residuals,
      the navigation system **characterized in that** the machine-readable instructions, when executed by the processor (16), further enable the processor (16) to:

      use a measurement error covariance matrix (R) including off-diagonal elements representing ionospheric-delay spatial correlation data to compute a weighted least-squares solution, which minimizes the weighted sum of the squared residuals, and to compute the corresponding solution error covariance matrix (P); and
      determine at least one protection level value based on the solution error covariance matrix (P) using a parity space technique.

2. The system of claim 1 wherein determining the measurement error covariance (R) matrix includes defining a plurality of grid points on a thin shell model of the ionosphere.

3. The system of claim 2 wherein the defined grid points are equally spaced in azimuth at a great circle distance from the system.

4. The system of claim 3 wherein the great circle distance is 1500 km.

5. The system of claim 2 wherein determining the measurement error covariance matrix (R) includes defining a vector of normalized ionospheric delays at the grid points.

6. The system of claim 1 wherein the at least one protection level value comprises a horizontal protection level (HPL) value.

7. The system of claim 1 wherein the at least one protection level value comprises a vertical protection level (VPL) value.

8. The system of claim 1 wherein the at least one protection level value comprises a horizontal exclusion leve (HEL) value.

9. A computer-readable medium (18) having computer-executable instructions for performing steps comprising:

   measuring pseudo-range residuals derived from the plurality of signals and determining a set of error estimates corresponding to the measured pseudo-range residuals;
   the computer-readable medium **characterized in that** the computer-readable medium further includes computer-executable instructions for performing the steps of
   modeling a spatially correlated ionospheric error for the plurality of signals from a respective plurality of satellites;
   using a measurement error covariance matrix (R) including off-diagonal elements representing ionospheric-delay spatial correlation data to compute a weighted least-squares solution, which minimizes the weighted sum of the squared residuals, and to compute the corresponding solution error covariance matrix (P);
   determining at least one protection level value based on the solution error covariance matrix (P) using a parity space technique; and
   displaying the at least one protection level value.


**Patentansprüche**

1. Navigationssystem für ein Fahrzeug mit einem Empfänger, der betreibbar ist, um mehrere Signale von mehreren Sendern zu empfangen, wobei das Navigationssystem Folgendes umfasst:

   einen Prozessor (16); und
   eine Speichereinrichtung (18), auf der maschinenlesbare Anweisungen gespeichert sind, die, wenn sie durch den Prozessor (16) ausgeführt werden, den Prozessor (16) zu Folgendem befähigen:

   Messen von aus den mehreren Signalen abgeleiteten Pseudostreckenresten und Bestimmen einer Menge von Fehlerschätzungen, die den gemessenen Pseudostreckenresten entsprechen,
   wobei das Navigationssystem **dadurch gekennzeichnet ist, dass** die maschinenlesbaren Anweisungen, wenn sie durch den Prozessor (16) ausgeführt werden, den Prozessor (16) ferner zu Folgendem befähigen:

   Verwenden einer Messfehler-Kovarianzmatrix (R) mit außerdiagonalen-Elementen, die Daten der räumlichen Korrelation ionosphärischer Verzögerung repräsentiert, um eine gewichtete Least-Squares-Lösung zu berechnen, die die gewichtete Summe der quadrierten Reste minimiert, und um die entsprechende Lösungs-Fehlerkovarianzmatrix (P) zu berechnen; und
   Bestimmen mindestens eines Schutzniveauwerts auf der Basis der Lösungsfehler-Kovarianzmatrix (P) unter Verwendung einer Paritätsraumtechnik.

2. System nach Anspruch 1, wobei das Bestimmen der Messfehler-Kovarianzmatrix (R) das Definieren mehrerer Gitterpunkte auf einem Dünnschalenmodell der Ionosphäre umfasst.

3. System nach Anspruch 2, wobei die definierten Gitterpunkte im Azimuth in einer Großkreisdistanz von dem System gleichmäßig beabstandet sind.

**4.** System nach Anspruch 3, wobei die Großkreisdistanz 1500 km beträgt.

**5.** System nach Anspruch 2, wobei das Bestimmen der Messfehler-Kovarianzmatrix (R) das Definieren eines Vektors normierter ionosphärischer Verzögerungen an den Gitterpunkten umfasst.

**6.** System nach Anspruch 1, wobei der mindestens eine Schutzniveauwert einen Horizontal-Schutzniveauwert (HPL) umfasst.

**7.** System nach Anspruch 1, wobei der mindestens eine Schutzniveauwert einen Vertikal-Schutzniveauwert (VPL) umfasst.

**8.** System nach Anspruch 1, wobei der mindestens eine Schutzniveauwert einen Horizontal-Exklusionsniveauwert (HEL) umfasst.

**9.** Computerlesbares Medium (18) das computerausführbare Anweisungen zum Ausführen von Schritten aufweist, umfassend:

Messen von aus den mehreren Signalen abgeleiteten Pseudostreckenresten und Bestimmen einer Menge von Fehlerschätzungen, die den gemessenen Pseudostreckenresten entsprechen;
wobei das computerlesbare Medium **dadurch gekennzeichnet ist, dass** das computerlesbare Medium ferner computerausführbare Anweisungen zum Ausführen der folgenden Schritte umfasst:

Modellieren eines räumlich korrelierten ionosphärischen Fehlers für die mehreren Signale aus mehreren jeweiligen Satelliten;
Verwenden einer Messfehler-Kovarianzmatrix (R) mit außerdiagonalen Elementen, die Daten der räumlichen Korrelation ionosphärischer Verzögerung repräsentiert, um eine gewichtete Least-Squares-Lösung zu berechnen, die die gewichtete Summe der quadrierten Reste minimiert, und um die entsprechende Lösungsfehler-Kovarianzmatrix (P) zu berechnen;
Bestimmen mindestens eines Schutzniveauwerts auf der Basis der Lösungsfehler-Kovarianzmatrix (P) unter Verwendung einer Paritätsraumtechnik; und
Anzeigen des mindestens einen Schutzniveauwerts.

**Revendications**

**1.** Système de navigation pour véhicule ayant un récepteur conçu pour recevoir une pluralité de signaux provenant d'une pluralité d'émetteurs, le système de navigation comprenant :

un processeur (16) ; et
un dispositif de mémoire (18) sur lequel sont stockées des instructions lisibles par machine qui, lorsqu'elles sont exécutées par le processeur (16), permettent au processeur (16) de :

mesurer des résidus de pseudo plage dérivés de la pluralité des signaux et déterminer un jeu d'estimations d'erreurs correspondant aux résidus de pseudo plage mesurés,
le système de navigation étant **caractérisé en ce que** les instructions lisibles par machine, lorsqu'elles sont exécutées par le processeur (16), permettent en outre au processeur (16) :

d'utiliser une matrice de covariance d'erreur de mesure (R) comprenant des éléments non diagonaux représentant des données de corrélation spatiale de retard ionosphérique pour calculer une solution aux moindres carrés pondérés, qui minimise la somme pondérée des résidus au carré, et pour calculer la matrice de covariance d'erreur de la solution correspondante (P), et
déterminer au moins une valeur de niveau de protection sur la base de la matrice de covariance d'erreur de la solution (P) à l'aide d'une technique d'espace de parité.

**2.** Système selon la revendication 1, dans lequel la détermination de la matrice de covariance d'erreur de mesure (R) comprend de définir une pluralité de points de grille sur un modèle à couche mince de l'ionosphère.

**3.** Système selon la revendication 2, dans lequel les points de grille définis sont espacés à intervalles égaux en azimut à une distance orthodromique du système.

4.  Système selon la revendication 3, dans lequel la distance orthodromique est 1500 km.

5.  Système selon la revendication 2, dans lequel la détermination de la matrice de covariance d'erreur de mesure (R) comprend de définir un vecteur de retard ionosphérique normalisé au niveau des points de grille.

6.  Système selon la revendication 1, dans lequel l'au moins une valeur de niveau de protection comprend une valeur de niveau de protection horizontal (HPL).

7.  Système selon la revendication 1, dans lequel l'au moins une valeur de niveau de protection comprend une valeur de niveau de protection vertical (VPL).

8.  Système selon la revendication 1, dans lequel l'au moins une valeur de niveau de protection comprend une valeur de niveau d'exclusion horizontal (HEL).

9.  Support lisible par ordinateur (18) comprenant des instructions exécutables par ordinateur pour exécuter les étapes comprenant :

    de mesurer des résidus de pseudo plage dérivés de la pluralité des signaux et déterminer un jeu d'estimations d'erreurs correspondant aux résidus de pseudo plage mesurés ;
    le support lisible par ordinateur étant **caractérisé en ce que** le support lisible par ordinateur comprend en outre des instructions exécutables par ordinateur pour exécuter les étapes consistant à :

    modéliser une erreur ionosphérique spatialement corrélée pour la pluralité de signaux à partir d'une pluralité respective de satellites ;
    utiliser une matrice de covariance d'erreur de mesure (R) comprenant des éléments non diagonaux représentant des données de corrélation spatiale de retard ionosphérique pour calculer une solution aux moindres carrés pondérés, qui minimise la somme pondérée des résidus au carré, et pour calculer la matrice de covariance d'erreur de la solution correspondante (P) ;
    déterminer au moins une valeur de niveau de protection sur la base de la matrice de covariance d'erreur de la solution (P) à l'aide d'une technique d'espace de parité ;
    et
    afficher l'au moins une valeur de niveau de protection.

EP 2 068 166 B1

**FIG.1**

22

$\swarrow$ 200

Input

Compute Sigma Values
on Pseudo-Range
Measurements  — 210

Compute Measurement
Matrix  — 220

Compute the Error
Covariance Matrix  — 230

Compute Weighted
Least-Squares Solution  — 240

Compute Protection
Value(s)  — 250

# FIG.2

FIG. 3

FIG. 4

EP 2 068 166 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6798377 B
- US 5760737 A

- US 6639549 A

**Non-patent literature cited in the description**

- **VANDERWERF K. et al.** FDE using multiple integrated GPS/inertial Kalman filters in the presence of temporarily and spatially correlated atmospheric errors. *Proceedings of the Institute of Navigation GPS,* 11 September 2001, 2676-2685